(19) Europäisches Patentamt
European Patent Office
Office européen des brevets

(11) **EP 4 524 178 A1**

(12) **EUROPEAN PATENT APPLICATION**

(43) Date of publication:
**19.03.2025 Bulletin 2025/12**

(21) Application number: **23197248.0**

(22) Date of filing: **13.09.2023**

(51) International Patent Classification (IPC):
**C08G 65/336** (2006.01)   **C08L 75/04** (2006.01)
**C08L 83/04** (2006.01)   **C09D 183/04** (2006.01)
**C09J 183/04** (2006.01)

(52) Cooperative Patent Classification (CPC):
(C-Sets available)
**C08G 65/336; C08L 75/04; C08L 83/04;
C09D 183/04; C09J 183/04;** C08G 77/18   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **PolyU GmbH
46147 Oberhausen (DE)**

(72) Inventors:
• **MAYER, Laura**
  **46147 Oberhausen (DE)**
• **KLEIN, Johann**
  **46147 Oberhausen (DE)**
• **RADEBNER, Judith**
  **46147 Oberhausen (DE)**

(74) Representative: **König Szynka Tilmann von
Renesse
Patentanwälte Partnerschaft mbB Düsseldorf
Mönchenwerther Straße 11
40545 Düsseldorf (DE)**

(54) **VISCOSITY MODIFYING ADDITIVES FOR SILYLATED POLYMERS**

(57)    A composition comprising a combination of (A) at least one silane-modified polymer, which is preferably moisture-curing and a (B) siloxane compound, preferably an oligomeric or polymeric siloxane compound such as an oligomeric or polymeric organoalkoxysiloxane, which is preferably moisture-curing, comprising, preferably consisting of, units of the formula (I), a process for the production of such a composition and the use of siloxane compounds (B) for the reduction of viscosity of silane-modified polymers (A).

EP 4 524 178 A1

(52) Cooperative Patent Classification (CPC): (Cont.)

C-Sets
**C08L 83/04, C08L 71/02;**
**C08L 83/04, C08L 75/04**

**Description**

The invention in general relates to siloxane compounds featuring alkoxy groups as additives for silylated polymers and a process for the production of those siloxane compounds.

Systems, especially moisture-curing systems, comprising silane-modified polymers (SMPs) typically are 1C or 2C, preferably 1C systems, that find application among others in the field of coatings, adhesives, sealants and elastomers (CASE).

In the late 1970s, moisture-curable silylated polyethers based on allyl-terminated polypropylene glycols, have been developed. However, high tin content catalysis, and high monool polyether content of these first generation polymers have limited the success of those systems.

Since then, various approaches toward the production of SMPs have been developed.

In one of these technologies, isocyanate-terminated polyurethane prepolymers are capped with various aminosilanes. However, they have a major disadvantage, as they show high end-viscosities due to the unwanted side reaction, i.e. chain-extension during the production. Though, this problem has been solved recently by a more selective manufacturing process, there is still a need to further reduce the viscosity of SMPs to give the compounders more freedom to formulate the material by achieving a high filler content without compromising on processability. A standard method of reducing the viscosity of SMPs has been the addition of solvents, or non-reactive plasticizers, such as phosphates or phthalates or aliphatic (sulfonic acid phenyl) esters or short-chain polyether polyols. It is desired to circumvent the non-reactive plasticizers commonly used as plasticizer migration issues limit their use in many applications.

One major difficulty when working with silane-modified polymers is thus the processability of those systems, in particular since they tend to exhibit high viscosity.

Accordingly, stable, low-viscosity, processable, moisture-curing alkoxysilane-terminated compositions with good storage stability, in which moisture scavengers can optionally be added, and preferably cure inhibitors. Those problems are solved by the composition according to the invention and a method for the production of such a composition. A process for the syntheses of siloxane compounds terminated with silanol groups is disclosed in EP0698632B1, wherein the production of alkoxy-functionalized siloxane compounds in general may be derived from that process.

The composition according to the invention comprises a combination of

(A) at least one silane-modified polymer, which is preferably moisture-curing, and
(B) siloxane compound, preferably an oligomeric or polymeric siloxane compound such as an oligomeric or polymeric organoalkoxysiloxane, which is preferably moisture-curing, comprising, preferably consisting of, units of the formula (I)

$$R^1_a(R^2O)_bR^3_cSiO_{(4-a-b-c)/2} \qquad (I),$$

wherein

R' may be identical or different and denotes a monovalent, SiC-bonded linear, branched or cyclic, saturated or unsaturated aliphatic hydrocarbyl radical having 1 to 12 carbon atoms;
$R^2$ may be identical or different and denotes a hydrogen or an alkylalkoxy radical, or a linear or branched, monovalent hydrocarbyl radical having 1 to 10 carbon atoms, preferably from 1 to 5 carbon atoms, more preferably $R^2$ being methyl or ethyl; or two radicals $R^2$ may form a cycle;
$R^3$ may be identical or different and denotes a monovalent, SiC-bonded linear, branched or cyclic, unsaturated or saturated organyl radical having 1 to 12 carbon atoms, preferably a monovalent, SiC-bonded linear, branched or cyclic, saturated or unsaturated hydrocarbyl radical or heterocarbyl radical with X = O
a may be 0 or 1 or 2,
b may be 0 or 1 or 2 or 3,
c may be 0 or 1,
with the proviso that the sum of a+b+c is < 4, and in > 60 % to < 100 % of the units of the formula (I) a+c is 2.

Preferably, if $R^3$ is a heterocarbyl radical the at least one heteroatom of the heterocarbyl is oxygen. Alternatively the heterocarbyl radical might comprise nitrogen, $R^3$ being selected from the group of aminocarbyl radicals comprising linear, branched and cyclic amino alkyl radicals, preferably amino (C1 to C6-alkyl) radicals.

The composition according to the invention preferably comprises a combination of

(A) at least one silane-modified polymer, which is preferably moisture-curing,
(B) siloxane compound, preferably an oligomeric or polymeric siloxane compound such as an oligomeric or polymeric organoalkoxysiloxane, comprising, preferably consisting of, units of the formula (I)

$$R^1{}_a(R^2O)_b R^3{}_c SiO_{(4-a-b-c)/2} \qquad (I),$$

wherein

$R^1$ may be identical or different and denotes a monovalent, SiC-bonded linear, branched or cyclic, saturated or unsaturated aliphatic hydrocarbyl radical having 1 to 12 carbon atoms;

$R^2$ may be identical or different and denotes a hydrogen or an alkylalkoxy radical, or a linear or branched, monovalent hydrocarbyl radical having 1 to 10 carbon atoms, preferably from 1 to 5 carbon atoms, more particularly $R^2$ being methyl or ethyl; or two radicals $R^2$ may form a cycle;

$R^3$ may be identical or different and denotes a monovalent, SiC-bonded, linear, branched or cyclic, unsaturated or saturated hydrocarbyl radical or heterocarbyl radical with X = O, having 1 to 12 carbon atoms

a may be 0 or 1 or 2,

b may be 0 or 1 or 2 or 3,

c may be 0 or 1,

with the proviso that the sum of a+b+c is < 4, and in > 60 % to < 100 % of the units of the formula (I) a+c is 2.

The siloxane compound thus comprises more than 60 % and less than 100 % of D-units according to formula (I) with the proviso that a+c = 2 and less than 40 % of T-units according to formula (I) with the proviso that a+c = 1, and optionally Q-units according to formula (I) with the proviso that a+c = 0 and/or M-units according to formula (I) with the proviso that a+c = 3. Accordingly, the letters, Q, T, D, and M, will be used to indicate the number of attached oxygen atoms on each silicon atom, where Q, T, D, and M, respectively, refer to four, three, two, and one oxygen atoms, regardless of whether the oxygen atom is bonded to an organic group or another silicon atom.

The repeat units of general formula (I) of the siloxane compound may be oriented in blocks or randomly, and the siloxane compound generally is a mixture of siloxane units with the structure of formula (I).

The combination of the synthesized siloxane compound (B) with at least one silane-modified polymer (SMP) (A) leads to a significant reduction in viscosity compared to the viscosity of the neat SMP. A viscosity reduction of almost 60 % may be achieved by blending as little as 10 wt% siloxane compound to the SMP, thus improving processability and providing for more freedom for adding additives/fillers etc.

The compatibility between the siloxane compounds according to the invention and the SMP is given, which is a prerequisite as products (compositions comprising the combination of siloxane compounds and the SMP) need to be transparent. Normally, blends of siloxanes, in particular linear (poly)siloxanes with a high content of alkyl substituents such as linear alkoxy-terminated polydimethylsiloxanes, are not compatible with SMPs carrying polyether polyol moieties. Surprisingly, it has been found that, compared to the current state of the technology of siloxane/SMP blends (e.g. WO2022048728A1), a T- and/or Q-unit content (meaning a+c = 0 or 1) of more than 40 % leading to a high content of alkoxy groups and/or a high content of aromatic substituents such as phenyl groups is not necessary to achieve compatibility.

Thus, the combination of the synthesized siloxane compound (B) with at least one silane-modified polymer (A) and hence the composition according to the invention or a shaped object obtained by curing a composition according to the invention comprising the combination of the synthesized siloxane compound (B) with at least one silane-modified polymer (A), is preferably transparent.

According to the invention, the term "silane" or "organosilane" refers to compounds which feature at least one, preferably two or three, hydrolysable groups, such as chloride, hydroxy groups, alkoxy groups, acyloxy groups or alkylalkoxy groups, preferably alkoxy groups, bonded directly to the silicon atom via Si- O bonds and at least one organic radical bonded directly to the silicon atom via an Si- C bond.

Correspondingly, the term "silane group" refers to the silicon-containing group bonded to the organic radical of the silane.

The silanes and their silane groups undergo hydrolysis in the event of contact with water or moisture. This produces organosilanols, meaning silicon-organic compounds containing one or more silanol groups (Si-OH groups) and, through subsequent condensation reactions, organosiloxanes, in other words silicon-organic compounds containing one or more siloxane groups (Si-O- Si groups) are formed.

According to the invention, the term "silane-modified" refers to compounds, preferably polymers, which have silane groups.

"Silane-modified polymers", accordingly, are polymers, more particularly organic polymers, which have at least one, preferably two or more, more preferably two silane groups. The silane-modified polymer is preferably moisture-curing, meaning that in the presence of water or moisture, more particularly moisture, the hydrolysis and condensation reactions on the silane groups take place, causing crosslinking of the polymer molecules and curing of the composition. The curing is also referred to as crosslinking.

In one embodiment the at least one silane-modified polymer comprises an n-valent polymeric backbone Y and n groups according to formula (II):

$$-Si(R^4)_p(OR^5)_{3-p} \qquad (II)$$

wherein

- R$^4$ is a linear or branched monovalent hydrocarbon radical having 1 to 10 carbon atoms, more preferably methyl or ethyl;
- R$^5$, identical or different, represents each an acyl radical, or a linear or branched, monovalent hydrocarbon radical having 1 to 10 carbon atoms, preferably from 1 to 5 carbon atoms, more particularly R$^5$ being methyl or ethyl; or two radicals R$^5$ may form a cycle; and
- p is 0, 1 or 2, preferably 0
- Y is preferably selected from the group consisting of polyether, polyether polyol, polyetheramine, polyester, poly(ether-ester), polyolefin, polycaprolactone, polycarbonate, poly(ether-carbonate), poly(meth)acrylate, polyacetal, polythioether, polyurea and polyurethane, more preferably polyether polyol or polyurethane
- n is an integer, preferably between 1 and 4, more preferably, 2 or 3, most preferably 2.

The at least one silane-modified polymer in component (A) may also be a blend of two or more silane-modified polymers with different backbones Y and/or different groups according to formula (II).

The groups having the formula (II) may be located at a main chain end, or at a side chain end, or at both ends, preferably at both ends. The main chain refers to the polymeric backbone Y, wherein the groups having the formula (II) are bound directly to the polymeric backbone Y or by groups dependent on the route of synthesis, respectively.

In one embodiment, the silane-modified polymer comprises at least one group, preferably two groups or three groups, more preferably two groups having the formula (II) above, wherein each occurrence of R$^5$ represents an alkyl group comprising from 1 to 10 carbon atoms, preferably from 1 to 5 carbon atoms.

Preferably, the silane-modified polymer comprises groups having the formula (II) above which are chosen from the group consisting of a trimethoxysilyl group, a triethoxysilyl group, a methyldimethoxysilyl group, a methyldiethoxysilyl group, a dimethylmethoxysilyl group, a dimethylethoxysilyl group.

More preferably, the silane-modified polymer comprises trimethoxysilyl, methyldimethoxysilyl or triethoxysilyl end groups, even more preferably trimethoxysilyl end groups.

Preferably, the groups of formula (II) are located at the main chain ends.

According to the invention, the silane-modified polymer may have a polymer backbone Y selected from the group consisting of polyether, polyether polyol, polyetheramine, polyester, poly(ether-ester), polyolefin, polycaprolactone, polycarbonate, poly(ether-carbonate), poly(meth)acrylate, polyacetal, polythioether, polyurea and polyurethane, preferably polyether or polyurethane.

The silane-modified polymer may have a number average molecular weight ranging from 1,000 to 100,000 g/mol, preferably ranging from 2,000 to 50,000 g/mol, more preferably from 2,000 to 30,000 g/mol, in particular from 2,000 to 25,000 g/mol.

The number average molecular weight of the silane-modified polymer can be measured by methods well known to those skilled in the art, for example by size-exclusion chromatography (SEC) using polystyrene type standards.

Suitable silane-modified polymers may be produced by a known method such as those described hereinafter, as described in US3971751A, or as commercially available. Commercially available products include, for example, Kaneka MS polymer series (polymers containing dimethoxymethylsilyl groups such as MS polymer S-203, MS polymer S-303, MS polymer S-227, MS polymer S-327, S-810, S-943, MS polymer SAX-220, MS polymer SAX-260, MS polymer SAX-350, MS polymer SAX-400, etc.; polymers containing trimethoxysilyl groups such as MS polymer SAX-510, MS polymer SAX-520, MS polymer SAX-530, MS polymer SAX-580, MS polymer SAX-590; MS polymer S-903, MS polymer S-911, etc.), Kaneka Silyl series (such as Silyl polymer SAT-200, Silyl polymer MA430, Cyril polymer MAX447, etc.), Kaneka MA series such as MA903, Kaneka SA series, such as SA100S and SA310S, or other series available from Kaneka Corporation; Polymer ST series, as for example Polymer ST61, Polymer ST81, or Tegopac® series from Evonik Industries AG; DESMOSEAL® series, as for example Desmoseal S XP 2636 or Desmoseal S XP 2774 from Covestro AG; SPUR+ series, as for example SPUR+1012 prepolymer, SPUR+1015 prepolymer, and SPUR+1050 prepolymer from Momentive Performance Materials Inc.; Geniosil STP-E series, such as Geniosil STP-E10, Geniosil STP-E30 or Geniosil STP-E15, Geniosil STP-E35 from Wacker Chemie AG or Excestar series, such as S2410, S2420, S3430, S3630, from Asahi Glass.

In one embodiment the silane-modified polymer is a silane-functionalized polymer 1a) obtainable by the reaction of a silane having at least one group that is reactive toward isocyanate groups, preferably selected from the group consisting of mercaptosilanes, hydroxysilanes (obtainable by Michael addition) and aminosilanes, more preferably aminosilanes with a polymer, preferably a polyurethane polymer, which contains isocyanate groups.

Preferably, the aminosilane has the following formula (IIa):

$$R^6\text{-NH-}R^7\text{-Si}(R^4)_p(OR^5)_{3-p} \qquad \text{(IIa)}$$

wherein:

- $R^4$, $R^5$, and $p$ are as defined above for the silane group of formula (II);
- $R^7$ represents a linear or branched divalent hydrocarbon radical having from 1 to 12 carbon atoms, optionally comprising at least one heteroatom, preferably $R^7$ represents an alkylene radical having from 1 to 6 carbon atoms, preferably methylene or propylene, more particularly a propylene; and
- $R^6$ is a hydrogen atom, a linear or branched alkyl radical, an arylalkyl radical, a cyclic radical comprising from 1 to 20 carbon atoms, a radical of the formula $R^7\text{-Si}(R^4)_p(OR^5)_{3-p}$ as defined above or a radical of the formula below:

$$R^{10}\text{-CH}(R^9)\text{-CH}(R^8)$$

in which the radicals $R^8$ and $R^9$ are in each case independently of one another are a hydrogen atom or a radical from the group consisting of $-R^{10}$, $-COOR^{10}$ and $-CN$;

the radical $R^{10}$ is a hydrogen atom, a radical from the group consisting of $-CH_2$ $-COOR^{10}$, $-COOR^{10}$, $-CONHR^{10}$, $-CON(R^{10})_2$, $-CN$;

the radical $R^{10}$ being a hydrocarbon radical having 1 to 20 carbon atoms which optionally comprises at least one heteroatom.

In particular, $R^6$ may be chosen from the following radicals:

$$NC\text{-CH}_2\text{-CH}_2\text{-}$$

$$R^{10}\text{-OOC-CH}_2\text{-CH}_2\text{-}$$

$$R^{10}\text{-NH-C(=O)-CH}_2\text{-CH}_2\text{-}$$

$$(R^{10})_2\text{-N-C(=O)-CH}_2\text{-CH}_2\text{-}$$

wherein
$R^{10}$ is as defined above.

Preferably the aminosilane is selected from the group consisting of primary aminosilanes, such as 3-aminopropyltrimethoxysilane, 3-aminopropyldimethoxymethylsilane, 3-aminopropyltriethoxysilane, 3-aminopropyldiethoxymethylsilane, 4-amino-3,3-dimethylbutyltrimethoxysilane, 4-amino-3,3-dimethylbutyldimethoxymethylsilane; secondary aminosilanes such as for example *N*-butyl-3-aminopropyltrimethoxysilane, *N*-phenyl-3-aminopropyltrimethoxysilane, *N*-cyclohexyl-3-aminopropyltrimethoxysilane; the products of the Michael-type addition of primary aminosilanes such as for example 3-aminopropyltrimethoxysilane or 3-aminopropyldimethoxymethylsilane with Michael acceptors such as for example acrylonitrile, acrylic esters, acrylamides, maleic diesters, methylene malonate diesters, itaconic diesters, e.g., dimethyl and diethyl *N*-(3-trimethoxysilylpropyl)aminosuccinate; and also analogs of the stated aminosilanes having ethoxy or dimethoxy groups instead of the methoxy groups on the silicon atom, preferably having ethoxy groups. Typically, Michael acceptors are compounds which contain double bonds activated by electron acceptor radicals and which are therefore able to enter with primary amino groups into nucleophilic addition reactions in a manner analogous to Michael addition (hetero-Michael addition).

Preferably polymers, more preferably polyurethane polymers, containing isocyanate groups for producing a silane-modified polymer 1a) are obtainable by the reaction of at least one polyol with at least one polyisocyanate, more particularly a diisocyanate. This reaction may be accomplished by bringing the polyol and the polyisocyanate to reaction with customary methods, as for example from temperatures of 0°C to 100°C, preferably 0°C to 50 °C, optionally in a presence of catalyst(s), the polyisocyanate being metered such that these isocyanate groups are preferably in a stoichiometric excess in relation to the hydroxyl groups of the polyol.

Suitable polyols for preparing the silane-modified polymer 1a) are, in particular, polyether polyols, polyether polyamines, polyester polyols, poly(ether-carbonate) and polycarbonate polyols, and also mixtures of these polyols. Particularly suitable are polyoxyethylene polyols (PEG), polyoxypropylene polyols (PPG), polyoxybutylene polyols (PBG), polytetrahydrofuran polyols (PTMEG) and poly(oxyethylene-oxypropylene) polyols more particularly polyoxypropylene diols, poly(oxyethylene-oxypropylene) diols, polyoxypropylene triols and poly(oxyethylene-oxypropylene) triols.

Preferred polyols are polyester polyols and polyether polyols, more particularly polyoxyethylene polyol, polyoxypropylene polyol, and polyoxypropylene-polyoxyethylene polyol, preferably polyoxyethylene diol, polyoxypropylene diol, polyoxyethylene triol, polyoxypropylene triol, polyoxypropylene-polyoxyethylene diol and polyoxypropylene- polyoxyethylene triol.

Polyisocyanates which can be used for preparing the silane-modified polymer 1a) are in particular commercial polyisocyanates, especially diisocyanates.

Preferably diisocyanates are selected from the group consisting of 1,6-hexamethylene diisocyanate (HDI), 2-methylpentamethylene 1,5-diisocyanate, 2,2,4- and 2,4,4-trimethyl-1,6-hexamethylene diisocyanate (TMDI), 1,12-dodecamethylene diisocyanate, lysine methyl and lysine ethyl ester diisocyanate, 1,3-diisocyanatocyclohexane, 1,4-diisocyanatocyclohexane, 5-isocyanato-1-(isocyanatomethyl)-1,3,3-trimethyl cyclohexane (isophorone diisocyanate or IPDI), perhydro-2,4'-diphenylmethane diisocyanate and perhydro-4,4'-diphenylmethane diisocyanate, 1,4- diisocyanato-2,2,6-trimethylcyclohexane (TMCDI), 1,3- and 1,4- bis(isocyanatomethyl)cyclohexane, m- and p-xylylene diisocyanate (m- and p-XDI), m- and p- tetramethyl-1,3-xylylene diisocyanate, m- and p-tetramethyl-1,4-xylylene diisocyanate, bis(1-isocyanato-1-methylethyl)naphthalene, 2,4- and 2,6-tolylene diisocyanate (TDI), 4,4'-, 2,4'-, and 2,2'-diphenylmethane diisocyanate (MDI), 1,3- and 1,4-phenylene diisocyanate, 2,3,5,6-tetramethyl-1,4-diisocyanatobenzene, naphthalene-1,5-diisocyanate (NDI), 3,3'-dimethyl-4,4'-diisocyanatobiphenyl (TODD, oligomers and polymers of the aforesaid isocyanates, and mixtures thereof.

In another embodiment, the silane-modified polymer is a silane-functional polymer 2a) obtainable by the reaction of an isocyanatosilane with a polymer which has functional end groups that are reactive towards isocyanate groups, more particularly hydroxyl groups, mercapto groups and/or amino groups.

This reaction may preferably take place in a stoichiometric ratio of the isocyanate groups to the functional end groups that are reactive toward isocyanate groups of 1:1, or with a slight excess of the functional end groups that are reactive toward isocyanate groups, as for example at temperatures of 20°C to 100°C, optionally in presence of catalyst(s). This is beneficial since at the end of the reaction no rest amount of isocyanate is present in the reaction mixture. However, alternatively an excess of isocyanate groups is also possible.

Preferably, the isocyanatosilane having the following formula (IIb):

$$NCO-R^7-Si(R^4)_p(OR^5)_{3-p} \qquad (IIb)$$

wherein $R^7$, $R^4$, $R^5$ and p are as defined above for the silane group of formula (II), including the preferred embodiments.

Examples of suitable isocyanatosilanes of the formula (IIb) are isocyanatomethyltrimethoxysilane, isocyanatomethyldimethoxymethylsilane, 3-isocyanatopropyltrimethoxysilane, 3-isocyanatopropyldimethoxymethylsilane, iso-cyanatomethyltriethoxysilane, isocyanatomethyldiethoxymethylsilane, isocyanatopropyltriethoxysilane, isocyanatopro-pyldiethoxymethylsilane.

As functional end groups that are reactive toward isocyanate groups, the polymer preferably contains hydroxyl groups. Suitable polymers containing hydroxyl groups are high molecular mass polyoxyalkylene polyols, preferably polyoxypropylene diols.

Also suitable for reaction with isocyanatosilanes of the formula (IIb) may be polyurethane polymers containing hydroxyl groups, more particularly polyurethane polymers terminated with hydroxyl groups. Polyurethane polymers of this kind are typically obtainable through the reaction of at least one polyisocyanate with at least one polyol. This reaction may be accomplished by reacting the polyol and the polyisocyanate by customary methods, as for example at temperatures of 50°C to 100°C, optionally in presence of a catalyst, the polyol being metered such that its hydroxyl groups are in a stochiometric excess in relation to the isocyanate groups of the polyisocyanate.

Polyols and polyisocyanates suitable for this reaction are typically the same as those already mentioned as being suitable for the preparation of a polymer containing isocyanate groups that is used for the preparation of a silane-modified polymer 1a) with aminosilane.

In another embodiment, the silane-modified polymer is a silane-functionalized polymer 3a), obtainable by a hydrosilylation reaction of polymers having terminal double bonds, preferably selected from the group consisting of poly(meth)acrylate polymers or allylpolyether polymers, more particularly of allyl-terminated polyoxyalkylene polymers.

In one embodiment the composition comprises at least one silane-modified polymer (A), which is preferably moisture-curing and preferably comprising an n-valent polymeric backbone Y and n groups according to formula (II) selected from at least one silane-modified polymer 1a) obtainable by the reaction of a silane having at least one group that is reactive toward isocyanate groups, preferably selected from the group consisting of mercaptosilanes, hydroxysilanes (obtainable by Michael addition) and aminosilanes, more preferably an aminosilane with a polymer, preferably a polyurethane polymer, which contains isocyanate groups, 2a) obtainable by the reaction of an isocyanatosilane with a polymer which has functional end groups that are reactive towards isocyanate groups, more particularly hydroxyl groups, mercapto groups and/or amino groups and/or 3a) obtainable by a hydrosilylation reaction of polymers having terminal double bonds, more preferably at least one silane-modified polymer 1a) or 2a), most preferably 1a).

Siloxane compound (B) according to the invention comprises at least 90 wt %, preferably consist of, units of the formula (I)

$$R^1_a(R^2O)_bR^3_cSiO_{(4-a-b-c)/2} \qquad (I),$$

wherein

$R^1$ may be identical or different and denotes a monovalent, SiC-bonded linear, branched or cyclic, saturated or unsaturated aliphatic hydrocarbyl radical having 1 to 12 carbon atoms;

$R^2$ may be identical or different and denotes a hydrogen or an alkylalkoxy radical, or a linear or branched, monovalent hydrocarbyl radical having 1 to 10 carbon atoms, preferably from 1 to 5 carbon atoms, more particularly $R^2$ being methyl or ethyl; or two radicals $R^2$ may form a cycle;

$R^3$ may be identical or different and denotes a monovalent, SiC-bonded linear, branched or cyclic, unsaturated or saturated organyl radical having 1 to 12 carbon atoms, preferably a linear, branched or cyclic, saturated or unsaturated hydrocarbyl radical or a heterocarbyl radical with X = O

a may be 0 or 1 or 2,

b may be 0 or 1 or 2 or 3,

c may be 0 or 1,

with the proviso that the sum of a+b+c is < 4, and in > 60 % to < 100 % of the units of the formula (I) a+c is 2.

In a preferred embodiment the composition according to the invention comprises

(A) at least one silane-modified polymer, which is preferably moisture-curing,

(B) siloxane compound, preferably an oligomeric or polymeric siloxane compound such as an oligomeric or polymeric organoalkoxysiloxane, comprising, preferably consisting of, units of the formula (I)

$$R^1_a(R^2O)_bR^3_cSiO_{(4-a-b-c)/2} \qquad (I),$$

wherein

$R^1$ may be identical or different and denotes a monovalent, SiC-bonded linear, branched or cyclic, saturated or unsaturated aliphatic hydrocarbyl radical having 1 to 12 carbon atoms;

$R^2$ may be identical or different and denotes a hydrogen or an alkylalkoxy radical, or a linear or branched, monovalent hydrocarbyl radical having 1 to 10 carbon atoms, preferably from 1 to 5 carbon atoms, more particularly $R^2$ being methyl or ethyl; or two radicals $R^2$ may form a cycle;

$R^3$ may be identical or different and denotes a monovalent, SiC-bonded, linear, branched or cyclic, unsaturated or saturated hydrocarbyl radical or heterocarbyl radical, preferably a heteroalkyl, with X = O, having 1 to 12 carbon atoms a may be 0 or 1 or 2,

b may be 0 or 1 or 2 or 3,

c may be 0 or 1,

with the proviso that the sum of a+b+c is < 4, and in > 60 % to < 100 % of the units of the formula (I) a+c is 2.

The term organyl radical herein refers to any organic substituent (e.g. hydrocarbon or heterocarbon) with one free valence at a carbon atom, such as acetonyl group, acyl group, alkyl group, alkenyl group, alkynyl group, carboxyl group etc. The organyl group thus does not include organoheteroyl groups i.e. carbon-containing group whose free valence is, however, localized at an atom other than carbon, such as acetoxy groups or trimethylsilyl group (TMS). The terms hydrocarbyl and heterocarbyl radical used herein have the same meaning as commonly understood by one of ordinary skill in the art to which this invention belongs. Hydrocarbyl thus referring to any univalent radical, derived from linear, branched, (bi)cyclic, saturated or unsaturated, aliphatic or aromatic hydrocarbons (compounds composed solely of carbon and hydrogen), such as methyl or phenyl. Aliphatic compounds can be linear, branched, (bi)cyclic saturated, joined by single bonds (alkanes), or unsaturated, with double bonds (alkenes) or triple bonds (alkynes). Open-chain compounds, whether straight or branched, and which contain no rings of any type, are always aliphatic. Cyclic compounds can be aliphatic if they are not aromatic. The least complex aliphatic compound is methane ($CH_4$).

If other elements (heteroatoms) are present in the carbon chain, the most common being oxygen, nitrogen, sulfur, and chlorine, it is no longer a hydrocarbon, but a heterocarbon. The term heterocarbyl refers to groups containing one or more carbon atoms and one or more heteroatoms and optionally hydrogen atoms, having a backbone of one or more

EP 4 524 178 A1

carbon atoms (C) and one or more heteroatoms (X), such as nitrogen (N), sulfur (S) or oxygen (O), preferably oxygen, preferably, wherein the terminal atom in the backbone is a carbon atom. The term heteroalkyl refers to a linear, branched or cyclic alkyl, an alkenyl or an alkynyl group in which one or more (preferably 1, 2 or 3) carbon atoms are replaced e.g. by an oxygen, nitrogen, phosphorus, boron, selenium, silicon or sulfur atom, preferably oxygen. The term heteroalkyl, wherein X=O thus refers to radicals such as alkoxyalkyl, alkyl epoxide, or a carboxylic acid derived group such as acyl, acylalkyl, alkoxycarbonyl, acyloxy, acyloxyalkyl or alkoxycarbonyloxy, preferably an alkoxyalkyl or alkylepoxide, more preferably a polyether radical, such as polyethylenglycol radical, or a glycidoxy alkyl radical.

$R^1$ may be identical or different and denotes a monovalent, SiC-bonded linear, branched or cyclic, saturated or unsaturated aliphatic hydrocarbyl radical having 1 to 12 carbon atoms. Preferably, $R^1$ may be identical or different and denotes a monovalent, SiC-bonded linear, branched or cyclic, saturated or unsaturated alkyl or alkylene radical having 1 to 12, preferably 1 to 6 carbon atoms, most preferably selected from methyl, ethyl, propyl, isobutyl, hexyl, octyl or vinyl.

$R^2$ may be identical or different and denotes a hydrogen or an alkylalkoxy radical, such as ethoxymethyl or methoxyethyl, or a linear or branched, monovalent hydrocarbyl radical having 1 to 10 carbon atoms, preferably from 1 to 5 carbon atoms, most preferably selected from methyl, ethyl, propyl or isobutyl, more preferably methyl or ethyl or two radicals $R^2$ may form a cycle.

$R^3$ may be identical or different and denotes a monovalent, SiC-bonded linear, branched or cyclic, unsaturated or saturated organyl radical, preferably a linear, branched or cyclic, saturated or unsaturated hydrocarbyl radical or a heterocarbyl radical with X = O. Preferably, $R^3$ may be identical or different and represents a monovalent, SiC-bonded, unsaturated or saturated, cyclic, linear or branched aliphatic or aromatic hydrocarbyl radical with 1 to 12 carbon atoms, more preferably 1 to 6 carbon atoms, most preferably selected from methyl, ethyl, propyl, isobutyl, hexyl, octyl, vinyl or phenyl or a glycidoxy alkyl radical, more preferably a glycidoxy-(C1 to C6-alkyl) radical, most preferably glycidoxypropyl radical. Above embodiments concerning the definitions of $R^1$, $R^2$, and $R^3$ may be combined in any way possible.

In an especially preferred embodiment $R^1$ may be identical or different and is most preferably selected from the group consisting of methyl, ethyl or isobutyl, and/or $R^2$ may be identical or different and is most preferably selected from the group consisting of hydrogen, methyl or ethyl and/or $R^3$ may be identical or different and is most preferably selected from the group consisting of methyl, isobutyl, vinyl, phenyl or glycidoxypropyl. In another embodiment the siloxane compound (B) comprises at least 90 wt%, preferably consist of, units of the formula (I), wherein $R^1$, $R^2$ and $R^3$ are as defined above and wherein

a may be 0 or 1,
b may be 0 or 1 or 2 or 3,
c may be 0 or 1,

with the proviso that the sum of a+b+c is < 4, and in that > 60% to < 100 % of the units of the formula (I) a+c is 2 and preferably in > 0 % to < 40 of the units of the formula (I) a+c is 1.

In an alternative embodiment the siloxane compound (B) comprises at least 90 wt%, preferably consist of, units of the formula (I), wherein $R^1$, $R^2$ and $R^3$ are as defined above and wherein

a may be 0 or 1 or 2,
b may be 0 or 1 or 2,
c may be 1,

with the proviso that the sum of a+b+c is < 4, and in that > 60% to < 100 % of the units of the formula (I) a+c is 2 and preferably in > 0 % to < 40 of the units of the formula (I) a+c is 1.

In an especially preferred embodiment the siloxane compound (B) comprises at least 90 wt%, preferably consist of, units of the formula (I), wherein $R^1$, $R^2$ and $R^3$ are as defined above and wherein

a may be 0 or 1,
b may be 0 or 1 or 2
c may be 1

with the proviso that the sum of a+b+c is < 4, and in that > 60 % to < 100 % of the units of the formula (I) a+c is 2 and preferably in > 0 % to < 40 % of the units of the formula (I) a+c is 1.

The siloxane compound according to the invention thus comprises at least 60% and less than 100% of units of the formula (I) with the proviso that a+c = 2. Preferably in 65 % to < 100 %, more preferably preferably > 60 % to 85 %, most preferably > 60 % to 65 %, of the units of the formula (I) a+c is 2.

Accordingly, in this embodiment, wherein

a may be 0 or 1,
b may be 0 or 1 or 2
c may be 1

in > 0 % to < 40 %, preferably > 0 % to 35 %, more preferably 25 % to < 40 %, of the units of the formula (I) a+c is 1.

The mixture of a majority of D-units and most preferably T-units can have certain advantages. A smaller amount of T- and/or Q-units leads to a smaller content of alkoxy groups ($OR^2 + OR^5$) in the (uncured) composition and thus to less mass reduction upon curing and low VOC (Volatile Organic Compounds), which may be measured after 28 days according to a test procedure based on ISO 16000-6, ISO 16000-9 or ISO 16000-10.

In one embodiment the content of alkoxy groups ($OR^2 + OR^5$) in the combination of A) and B) accordingly is less than 22 wt%, preferably less than 15 wt% based on the total amount of the combination of at least one silane-modified polymer and siloxane compound. More preferably the ratio of silicon atoms in the combination of the at least one silane-modified polymer and siloxane compound per alkoxy group in the combination of the at least one silane-modified polymer and siloxane compound $n(Si_{SMP+Sil})/n(OR^2 + OR^5)$ is 0.6 to 1.25. The latter value eliminates the effect of siloxanes and SMPs having a different molecular weight and provides a comparable parameter that is also more directly linked to the technical effect.

Above values for the content of alkoxy groups, were determined by firstly analyzing the content of alkoxy groups by $^1$H nuclear magnetic resonance spectroscopy. The respective content of alkoxy groups ($-OR^2$) in the siloxane compound is preferably less than or equal to 35 wt%, preferably less than 30 wt% based on the siloxane compound preferably determined by $^1$H nuclear magnetic resonance spectroscopy. More preferably the ratio of silicon atoms per alkoxy group $n(Si)/n(OR^2)$ in the siloxane compound is greater than or equal to 1.00, preferably 1.25 to 2, preferably determined by $^1$H nuclear magnetic resonance spectroscopy. Those values were taken into account for the following calculation of the content of alkoxy groups, here methoxy groups, based on the total amount of the combination of the at least one silane-modified polymer and siloxane compound .

**Exemplary calculation for a trimethoxysilyl-modified polymer with a functionality of 2 *(N(OMe_{SMP})* = 6) and a molecular weight *Mw*(*SMP*) [g/mol] of 18000 (determined via** size-exclusion chromatography (SEC)):

The molecular weight of methoxy group is *M*(*OMe*) [g/mol] = 31.03.

The methoxy content [wt%] of the silane modified polymer *w*(*OMe_{SMP}*) [wt%] can be calculated to be

$$w(OMe_{SMP})\,[\text{wt\%}] = \frac{N(OMe_{SMP})\cdot M(\text{OMe})}{M_w(SMP)} = 1.0$$

.

The exemplary siloxane compound employed had an average number of linked units of 4.5 as analyzed by $^1$H nuclear magnetic resonance spectroscopy and an according calculated average molecular weight $M_n$(*Sil*) [g/mol] of 450.0. The molecular weight was calculated from the ratio OMe/Si and the average product unit as determined by $^1$H nuclear magnetic resonance spectroscopy.

Methoxy content in the siloxane compound determined by $^1$H nuclear magnetic resonance spectroscopy is *w*(*OMe_{Sil}*) [wt%] = 25.5 wt% with a ratio of *n*(*OMe*)/*n*(*Si*) (measured by $^1$H NMR) of 0.8 and a ratio of *n*(*Si*)/*n*(*OMe*) of 1.25.

For a mass fraction *w*(*Sil*) [wt%] of 10 or mole fraction *x*(*Sil*) [mol%] of 82 the methoxy content in the composition (A) + (B) is calculated as

$$w(OMe)\,[wt\%] = w(OMe_{SMP}) \cdot w(SMP) + w(OMe_{Sil}) \cdot w(Sil) = 3.4$$

The ratio of *n*(*OMe*)/*n*(*Si*) in the composition (A) + (B) is calculated as

$$\frac{n(\text{OMe})}{n(\text{Si})} = x(SMP)\cdot\frac{n(OMe)}{n(Si)}(SMP) + x(Sil)\cdot\frac{n(OMe)}{n(Si)}(\text{Sil}) = 1.57.$$

The ratio of *n*(*Si*)/*n*(*OMe*) in the composition (A) + (B) being 0.64, accordingly.

All stated values concerning the content or ratio of certain molecules or groups, if not indicated otherwise, have been determined from $^1$H nuclear magnetic resonance spectroscopy in combination with calculation methods as elaborated above, where applicable.

The composition preferably comprises 2 parts per weight to 200 parts per weight, preferably 10 parts per weight to 100 parts per weight, more preferably 10 parts per weight to 45 parts per weight, of siloxane compound comprising, preferably consisting of units of the formula (I) to 100 parts per weight of silane-modified polymer.

Preferably, the siloxane compound (B) has an average molecular weight $M_n$ of at least 200 g/mol, particularly preferably of at least 300 g/mol, preferably being at most 10000 g/mol, more preferably at most 3000 g/mol, most preferably at most 1000 g/mol preferably determined by calculation from data of $^1$H nuclear magnetic resonance spectroscopy.

Preferably, siloxane compound (B) has a polydispersity ($M_w/M_n$) of 1.0 to 3.5, particularly preferably of 1.0 to 2.0, more preferably 1.0 to 1.5 determined via size-exclusion chromatography (SEC).

The siloxane compound can be solid or liquid, preferably liquid, at room temperature and may be used either in pure form or in the form of a mixture with a suitable solvent.

According to formula (I) the units may have different substitution patterns, preferably wherein c in the units is 0 to 1, representing the presence of less aromatic substituents $R^3$. The reduction of aromatic substituents, especially of phenyl groups, was surprisingly found to have a further positive effect on the viscosity, meaning that siloxane compounds with limited content of aromatic groups, in particular phenyl groups, lead to a higher reduction of the viscosity.

In one embodiment the content of phenyl groups in the combination of (A) and (B) preferably is equal to or less than 50 wt%, in particular 0 to 50 wt%, more preferably equal to or less than 25 wt%, most preferably equal to or less than 15 wt% based on the total amount of the combination of (A) and (B). The phenyl content was determined analog to the alkoxy content, by calculation from the content of phenyl content in the siloxane compound determined by $^1$H nuclear magnetic resonance spectroscopy. The silane modified polymer typically does not contain phenyl groups.

Preferably above content of phenyl groups is present in siloxane compounds comprising, preferably consisting of, units with a chain length of 2 to 20 D-, T-, M-, and/or Q- units, preferably 4 to 15, more preferably 4 to 10 D-, T-, M-, and/or Q- units of formula (I) preferably determined by $^1$H nuclear magnetic resonance spectroscopy. In an especially preferred embodiment the content of phenyl groups in the composition preferably is less than 5 wt% based on the total composition.

In a further embodiment, the ratio [n($R^{1,3}$) - n(Alkyl)] / n(Alkyl) of hydrocarbyl substituents $R^1$ and $R^3$, that are not alkyl groups (vinyl, phenyl, etc.) to alkyl, preferably methyl groups (-CH$_4$), in the siloxane compound is 0 to 1.7 and optionally the content of phenyl groups in the composition is equal to or less than 50 wt%, in particular 0 to 50 wt%, more preferably equal to or less than 25 wt%, most preferably equal to or less than 15 wt% based on the total composition. Above ratio has the advantage, that it has positive effects on the reactivity of the siloxane compound. A high content of substituents other than alkyl lead to an unwanted elevated SOT.

The composition preferably contains less than 1 wt% water scavenger such as vinyltrimethoxysilane (VTMO), more preferably no vinyltrimethoxysilane.

An exemplified composition may further comprise additives and adjuvants such as e.g. fillers, plasticizers, catalysts, adhesion promoters, water scavengers, polymerization inhibitors and more.

The composition may comprise a curing catalyst. Typically used curing catalyst in the composition of the invention to catalyze the curing reaction of moisture-curable SMP of formula (II) include metal-containing and non- metal-containing catalysts. Examples of the metal portion of the catalysts include tin, titanium, zirconium, lead, iron cobalt, antimony, manganese, bismuth and zinc compounds. Other suitable non-limiting examples of catalysts used for making polyurethane polymer are well known in the art and include chelates of various metals such as those which can be obtained from acetylacetone, benzoylacetone, trifluoroacetylacetone, ethyl acetoacetate, salicylaldehyde, cyclopentanone-2-carboxylate, acetylacetoneimine, bis-acetylaceone-alkylenediimines, salicylaldehydeimine, and the like, with the various metals such as Al, Be, Mg, Zn, Cd, Pb, Ti, Zr, Sn, As, Bi, Cr, Mo, Mn, Fe, Co, Ni, and metal oxide ions; alcoholates and phenolates of various metals such as Ti(OR)$_4$, Sn(OR)$_4$, Sn(OR)$_2$, Al(OR)$_3$, Bi(OR)$_3$ and the like, wherein R is alkyl or aryl of from 1 to 18 carbon atoms, and reaction products of alcoholates of various metals with carboxylic acids, beta-diketones, and 2-(N,N-dialkylamino)alkanols, such as well-known chelates of titanium obtained by this or equivalent procedures.

Additional useful catalysts include organometallic derivatives of tetravalent tin, trivalent and pentavalent As, Sb, and Bi, and metal carbonyls of iron and cobalt; and combinations thereof. In one specific embodiment organotin compounds that are dialkyltin salts of carboxylic acids, can include the non-limiting examples of dibutyltin diacetate, dibutyltin dilaurate, dibutyltin maleate, dilauryltin diacetate, dioctyltin diacetate, dibutyltin- bis(4-methylaminobenzoate), dibutyltindilaurylmercaptide, dibutyltin-bis(6-methylaminocaproate), and the like, and combinations thereof. Similarly, in another specific embodiment there may be used trialkyltin hydroxide, dialkyltin oxide, dialkyltin dialkoxide, or dialkyltin dichloride and combinations thereof. Non-limiting examples of these compounds include trimethyltin hydroxide, tributyltin hydroxide, trioctyltin hydroxide, dibutyltin oxide, dioctyltin oxide, dilauryltin oxide, dibutyltin- bis(isopropoxide), dibutyltin-bis(2-dimethylaminopentylate), dibutyltin dichloride, dioctyltin dichloride, and the like, and combinations thereof.

The amount of catalyst that generally used in the compositions can be from 0.0011 to 10 parts by weight per one hundred parts of the silane modified polymer of formula (II), and more specifically, from 0.1 to 0.15 parts by weight per one hundred parts of the, preferably moisture-curable siloxane compound.

In an especially preferred embodiment, the composition comprises a combination of

(A) at least one silane-modified polymer, preferably 1a) or 2a) more preferably 1a), and
(B) siloxane compound consisting of, units of the formula (I)

$$R^1{}_a(R^2O)_bR^3{}_cSiO_{(4-a-b-c)/2} \qquad (I),$$

wherein

R$^1$ may be identical or different and is most preferably selected from the group consisting of methyl, ethyl or isobutyl,
R$^2$ may be identical or different and is most preferably selected from the group consisting of hydrogen, methyl or ethyl
R$^3$ may be identical or different and is most preferably selected from the group consisting of methyl, isobutyl, vinyl, phenyl or glycidoxypropyl.
a may be 0 or 1 or 2,
b may be 0 or 1 or 2 or 3,
c may be 0 or 1, preferably
a may be 0 or 1,
b may be 0 or 1 or 2,
c may be 1,

with the proviso that the sum of a+b+c is < 4, and in > 60 % to < 100 %, preferably in 65 % to < 100 %, more preferably in > 60 % to 85 %, most preferably in > 60 % to 65 %, of the units of the formula (I) a+c is 2.

The invention also relates to a process for the production of siloxane compounds with alkoxy groups involving hydrolysis/condensation of alkoxysilanes, preferably in the presence of a cation exchange resin, for moisture-curable compositions.

A viable route for the production of siloxanes according to the invention is disclosed in EP0698632B1, wherein the process as disclosed in EP0698632B1 is stopped after the first process step and the production of siloxanes in order to not obtain silanol group terminated siloxanes.

The process according to the invention comprises the steps

I. synthesis of siloxane compound of the general formula (I) by effecting hydrolysis and condensation of alkoxysilanes of the following general formula:

$$R^1{}_d(R^2O)_eR^3{}_fSi \qquad (III)$$

wherein R$^1$, R$^2$ and R$^3$ are as defined above for formula (I), being R$^1$ may be identical or different and denotes a monovalent, SiC-bonded linear, branched or cyclic, saturated or unsaturated aliphatic hydrocarbyl radical having 1 to 12 carbon atoms;
R$^2$ may be identical or different and denotes a hydrogen or an alkylalkoxy radical, or a linear or branched, monovalent hydrocarbyl radical having 1 to 10 carbon atoms, preferably from 1 to 5 carbon atoms, more particularly R$^2$ being methyl or ethyl; or two radicals R$^2$ may form a cycle;
R$^3$ may be identical or different and denotes a monovalent, SiC-bonded linear, branched or cyclic, unsaturated or saturated organyl radical having 1 to 12 carbon atoms, preferably a linear, branched or cyclic, saturated or unsaturated hydrocarbyl radical or a heterocarbyl radical with X = O
d may be 0 or 1 or 2,
e may be 1 or 2 or 3 or 4,
f may be 0 or 1

with the proviso that the sum of d+e+f is 4, and in > 60 % to < 100 % of the alkoxysilanes of the formula (III) d+f is 2

II. combining the siloxane compound of the general formula (I) formed in step I. with silane-modified polymer, preferably to a combination of (A) at least one silane-modified polymer, which is preferably moisture-curing and a (B) siloxane compound.

The process preferably comprises the steps

I. synthesis of siloxane compound of the general formula (I) by effecting hydrolysis and condensation of alkoxysilanes of the following general formula:

$$R^1{}_d(R^2O)_eR^3{}_fSi \qquad (III)$$

wherein $R^1, R^2$ and $R^3$ are as defined above for formula (I), being

$R^1$ may be identical or different and denotes a monovalent, SiC-bonded linear, branched or cyclic, saturated or unsaturated aliphatic hydrocarbyl radical having 1 to 12 carbon atoms;

$R^2$ may be identical or different and denotes a hydrogen or an alkylalkoxy radical, or a linear or branched, monovalent hydrocarbyl radical having 1 to 10 carbon atoms, preferably from 1 to 5 carbon atoms, more particularly $R^2$ being methyl or ethyl; or two radicals $R^2$ may form a cycle;

$R^3$ may be identical or different and denotes a monovalent, SiC-bonded, linear, branched or cyclic, unsaturated or saturated hydrocarbyl radical or heterocarbyl radical with X = O, having 1 to 12 carbon atoms

d may be 0 or 1 or 2,
e may be 1 or 2 or 3 or 4,
f may be 0 or 1

with the proviso that the sum of d+e+f is 4, and in > 60 % to < 100 % of the alkoxysilanes of the formula (III) d+f is 2.

II. combining the siloxane compound of the general formula (I) formed in step I. with silane-modified polymer, preferably to a combination of (A) at least one silane-modified polymer, which is preferably moisture-curing and a (B) siloxane compound.

Preferably in > 0 % to < 40 % of the alkoxysilanes of the formula (III) d+f is 1.

The siloxane compound obtained is being used as a reactive diluent in SMP compositions to significantly reduce the initial viscosity of the SMP. Furthermore, a process is provided for the preparation of a siloxane compound comprising primarily a+c = 2 units, that are still compatible with silane-modified polymers (SMP).

$R^1$, $R^2$ and $R^3$ of formula (III) are as defined above for formula (I). Alkoxysilanes suitable to be used for the process according to the invention accordingly are preferably selected from the group consisting of dimethyl-dimethoxysilane, dimethoxy-methyl-phenylsilane, dimethoxy-methyl-vinylsilane, diethoxy-dimethylsilane, diethoxy-methyl-phenylsilane, diethoxy-methyl-vinylsilane, dimethylbis(metoxyethoxy)silane or mixtures thereof and the group selected from trimethoxymethylsilane, vinyltrimethoxysilane, phenyltrimethoxysilane, trimethoxyethylsilane, trimethoxypropylsilane isobutyltrimethoxysilane, (3-glycidyloxypropyl)trimethoxysilane, tris(2-methoxyethoxy)vinylsilane, methyltriethoxysilane, vinyltriethoxysilane, phenyltriethoxysilane, triethoxyethylsilane, triethoxypropylsilane isobutyltriethoxysilane, (3-glycidyloxypropyl)triethoxysilan or mixtures thereof, more preferably from the group consisting of dimethyl-dimethoxysilane, dimethoxy-methyl-phenylsilane, dimethoxy-methyl-vinylsilane, diethoxy-dimethylsilane, diethoxy-methyl-phenylsilane, diethoxy-methyl-vinylsilane or mixtures thereof and the group selected from trimethoxymethylsilane, vinyltrimethoxysilane, phenyltrimethoxysilane, trimethoxyethylsilane, trimethoxypropylsilane isobutyltrimethoxysilane, (3-glycidyloxypropyl)trimethoxysilane, methyltriethoxysilane, vinyltriethoxysilane, phenyltriethoxysilane, triethoxyethylsilane, triethoxypropylsilane isobutyltriethoxysilane, (3-glycidyloxypropyl)triethoxysilan or mixtures thereof.

Preferably, the alkoxysilane of formula (III) contains less than 100 ppm of residual chlorine.

In a preferred embodiment in step I. alkoxysilanes of the general formula (III) are hydrolysed and condensated, wherein

d may be 0 or 1
e may be 2 or 3 or 4,
f may be 0 or 1

with the proviso that the sum of d+e+f is 4, and in > 60 % to < 100 % of the alkoxysilanes of the formula (III) d+f is 2.

In an alternative embodiment in step I. alkoxysilanes of the general formula (III) are hydrolysed and condensated, wherein

d may be 0 or 1 or 2
e may be 1 or 2 or 3,
f may be 1

with the proviso that the sum of d+e+f is 4, and in > 60 % to < 100 % of the alkoxysilanes of the formula (III) d+f is 2.

In an especially preferred embodiment in step I. alkoxysilanes of the general formula (III) are hydrolysed and condensated, wherein

d may be 0 or 1

e may be 2 or 3,
f may be 1

with the proviso that the sum of d+e+f is 4, and in > 60 % to < 100 % of the alkoxysilanes of the formula (III) d+f is 2.

In a preferred embodiment in step I. in at least 65 % to less than 100 % preferably in 65 % to < 100 %, more preferably in > 60 % to 85 %, most preferably in > 60 % to 65 %, of the alkoxysilanes of the formula (III) d+f is 2.

Accordingly, in > 0 % to < 40 %, preferably > 0 to 35 %, more preferably 30 to < 40%, of alkoxysilanes of the formula (III) d+f is 1.

The process according to the invention allows for a precise control of the structure of the composition and molecular weight of the siloxane compound e.g. by addition of a defined amount of water. The invention thus also relates to a controlled process for the production of the siloxane compound (B), preferably low molecular weight, organosiloxanes, preferably oligomeric or polymeric organosiloxanes, with alkoxy groups involving hydrolysis/condensation of alkoxysilanes, preferably in the presence of a cation exchange resin.

In a preferred embodiment the siloxane compound according to formula (I) and/or as produced in step I. has a chain length of 2 to 20 D-, T-, M-, and/or Q- units, preferably T- and D-units, preferably 4 to 15, more preferably 4 to 10 D-, T-, M-, and/or Q- units, more preferably D- and T-units determined by $^1$H nuclear magnetic resonance spectroscopy.

It was surprisingly found that by employing the process according to the invention, despite starting from a majority of D-unit monomers, the formation of octamethylcyclotetrasiloxane (D4) which is a critical substance (SVHC) may be reduced, preferably to < 2 wt%, or even completely avoided during the synthesis especially when using a mixture of a majority of D-units with preferably T-units. In a preferred embodiment the content of octamethylcyclotetrasiloxane in the siloxane compound is less than 2 wt % based on the total amount of siloxane compound, preferably obtained in a process according to the invention, more preferably not comprising a step of purification of the siloxane compound.

In a preferred embodiment the content of octamethylcyclotetrasiloxane is less than or equal to 0.25 wt%, preferably 0 to 0.25 wt%, more preferably less than or equal to 0.1 wt%, most preferably less than or equal to 0.02 wt%, based on the total composition.

In an especially preferred embodiment the ratio of $R^2$ of the alkoxysilane of formula (III) in mol to the amount of water used in the hydrolysis of the alkoxysilane in mol is 2 to 5, preferably 2.25 to 3.5. The water added may be deionized water having an electrical conductivity of at least $10^{10}$ M$\Omega$, preferably at least $10^{12}$ $\Omega$.

Preferably no additional solvent, such as alcohol, is added during the process.

The hydrolysis of the alkoxysilanes of formula (III) is preferably conducted at a temperature lower than 80 °C, more preferably lower than 65 °C.

In a preferred embodiment step I. is taken out in the presence of a cation exchange resin, preferably wherein the cation exchange resin is a macroporous cation exchange resin having a pore volume of at least 0.1 mL/g as measured by mercury porosimetry. Alternatively, the process may be taken out in the presence of an acid, preferably hydrochloric acid.

The cation exchange resin allows mild hydrolysis to take place while maintaining hydrolyzing water at a nearly neutral pH level.

Preferably, the amount of cation exchange resin used in the hydrolysis of the alkoxysilane of formula (III) is 0.0001 to 30 parts by weight per 100 parts by weight of the alkoxysilane of formula (III) and water combined.

Further compounds, e.g. fillers, plasticizers, catalysts, adhesion promoters, water scavengers, polymerization inhibitors and more, may be added to the combination of (A) at least one silane-modified polymer, preferably according to formula (II) and the (B) siloxane compound as formed in step I and/or according to formula (I) to form a composition according to the invention. However, the combination of (A) at least one silane-modified polymer preferably according to formula (II) and the (B) siloxane compound according to formula (I) and/or as formed in step I. may also be added to other compounds, preferably as defined above, previously provided.

In an especially preferred embodiment, the composition consists of a combination of (A) at least one silane-modified polymer, preferably according to formula (II) and the (B) siloxane compound according to formula (I) and optionally a water scavenger, preferably vinyltrimethoxysilane (VTMO). Another object of the invention thus is a composition consisting of (A) at least one silane-modified polymer, preferably according to formula (II) and the (B) siloxane compound according to formula (I) and optionally a water scavenger, preferably vinyltrimethoxysilane (VTMO).

In a further embodiment, a composition, preferably obtained by a process according to the invention or any of the embodiments, has a viscosity which is at least 30%, preferably at least 50% reduced compared to the same composition without alkoxysilanes. The dynamic viscosity was measured with a Brookfield DV2T EXTRA™ Viscometer using Spindle SC4-31 at 25°C.

A further object of the invention is a shaped object obtained by curing a composition according to the invention or obtained by a process according to the invention or any of the embodiments.

The invention also relates to the use of a siloxane compound comprising, preferably consisting of, units according to formula (I), preferably as defined above or obtained by a process according to the invention or any of the embodiments, for reduction of the dynamic viscosity of silane functionalized polymer, preferably by at least 50%, preferably measured with a Brookfield DV2T EXTRA™ Viscometer using Spindle SC4-31 at 25°C, more preferably without altering the transparency and/or mechanical properties of the silane functionalized polymer, most preferably without altering the values for shore A hardness, tensile strength and elongation at break by more than 15%. However, further functionalization of oligomeric siloxane could also lead to a strength modifier for SMP applications.

## Examples:

Technical Data of Instruments

The dynamic viscosity was measured with a Brookfield DV2T EXTRA™ Viscometer at 25 °C.

The kinematic viscosity was measured with Micro-Ubbelohde Viscometer (Capillary no. Ic) at 25 °C.

The alkoxy group content, the phenyl group content and the D-unit content in the siloxane compound were determined by $^1$H nuclear magnetic resonance spectroscopy ($^1$H-NMR; Bruker Avance I 400 MHz; measured in $CDCl_3$).

Details of raw materials and Suppliers

Dimethyldimethoxysilane (CAS: 1112-39-6) commercialized by abcr GmbH.

Vinyltrimethoxysilane (CAS: 2768-02-7) commercialized by by TCI EUROPE N.V.

Phenyltrimethoxysilane (CAS: 2996-92-1) commercialized by abcr GmbH.

Dimethoxymethylvinylsilane (CAS: 16753-62-1) commercialized by TCI EUROPE N.V.

Dimethoxymethylphenylsilane (CAS: 3027-21-2) commercialized by TCI EUROPE N.V.

Trimethoxy(methyl)silane (CAS: 1185-55-3) commercialized by TCI EUROPE N.V.

Isobutyltrimethoxysilane (CAS: 18395-30-7) commercialized by Thermo Fisher GmbH.

3-Glycidyloxypropyltrimethoxysilane (CAS: 2530-83-8) commercialized by TCI EUROPE N.V.

Amberlyst™ 15(H) (CAS: 39389-20-3) commercialized by Thermo Fisher Scientific Inc.

Si-PolyU 5013 (trimethoxysilyl-terminated polyurethane polymer with a dynamic viscosity at 25 °C of approx. 13,000 mPas) commercialized by PolyU.

Si-PolyU 4020 (trimethoxysilyl-terminated polyurethane polymer with a dynamic viscosity at 25 °C of approx. 20,000 mPas) commercialized by PolyU.

Si-PolyU 2550 (trimethoxysilyl-terminated polyurethane polymer with a dynamic viscosity at 25 °C of approx. 50,000 mPas) commercialized by PolyU.

Geniosil® STP-E35 (γ-silane-terminated polyether with a dynamic viscosity at 25 °C of approx. 30,000 mPas), available from Wacker Chemie AG.

Dynasylan® 6490 (methoxy-functional vinyl siloxane oligomer with a dynamic viscosity approx. 2-4 mPas) commercialized by Evonik Operations GmbH.

SILIKOPHEN® AC 1000 (methoxy-functional methyl silicone resin with a dynamic viscosity approx. 5-10 mPas and a methoxy content of approx. 35 wt%) commercialized by Evonik Operations GmbH.

DOWSIL™ 3074 Intermediate (methoxy-functional dimethyl, methoxyphenyl siloxane with phenyl silsesquioxane with a dynamic viscosity approx. 90-180 mPas and a methoxy content of approx. 15-18 wt%) commercialized by The Dow Chemical Company.

Dioctyltin dilaurate (DOTL) (CAS: 3648-18-8) commercialized by BNT Chemicals GmbH.

All stated values concerning the content or ratio of certain molecules or groups in the combination of siloxane compound and silane modified polymer, if not indicated otherwise, have been determined from $^1$H nuclear magnetic resonance spectroscopy in combination with calculation methods, if applicable.

## General experimental procedure for the synthesis of siloxane compounds (SC)

250 g of a mixture of a dialkoxy-functionalized silane and a trialkoxy-functionalized silane 2 were placed in a 500 mL reaction flask. Subsequently, deionized water and 0.46 wt% cation exchange resin (Amberlyst™ 15(H)) were added at room temperature under ambient pressure. After stirring for 15 minutes, a uniform solution was obtained, and the reaction mixture was heated up to 60 °C for 4 h. After the reaction time, the mixture was filtrated, and the volatile organic compounds were removed by distillation under reduced pressure (1. 120 °C under ambient pressure; 2. 90 °C and 70 mbar). The target siloxane compound (SC) was obtained.

Table 1 shows the composition of educts (alkoxysilanes) used in the general process as disclosed above in order to obtain siloxane compounds SC1 - SC10.

**Table 1: Siloxane compounds prepared according to the general experimental procedure**

| Example | Amount of Silane 1 & 2 | Content of D-Units of siloxane compound [mol%] |
|---|---|---|
| SC1 | 150.2 g Dimethyldimethoxysilane<br>99.7 g Vinyltrimethoxysilane | 65 |
| SC2 | 160.8 g Dimethoxymethylvinylsilane<br>89.2 g Trimethoxy(methyl)silane | 62 |
| SC3 | 132.4 g Dimethyldimethoxysilane<br>117.6 g Phenyltrimethoxysilane | 64 |
| SC4 | 139.0 g Dimethyldimethoxysilane<br>111.0 g Isobutyltrimethoxysilane | 65 |
| SC5 | 178.3 g Dimethoxymethylphenylsilane<br>71.7 g Trimethoxy(methyl)silane | 64 |
| SC6 | 157.7 g Dimethoxymethylphenylsilane<br>92.3 g Phenyltrimethoxysilane | 61 |
| SC7 | 198.0 g Dimethyldimethoxysilane<br>51.8 g Isobutyltrimethoxysilane | 85 |
| Comp. SC8 | 56.0 g Dimethyldimethoxysilane<br>194.0 g Isobutyltrimethoxysilane | 30 |
| Comp. SC9 | 250.0 g Isobutyltrimethoxysilane | 0 |
| SC10 | 185.6 g Dimethyldimethoxysilane<br>64.4 g 3-Glycidyloxypropyltrimethoxysilane | 66 |

Alternatively hydrochlorid acid may be used as catalyst (comparative example to SC1): 40.0 g of dimethyldimethoxysilane and 26.6 g of vinyltrimethoxysilane were placed in a 250 mL reaction flask. A mixture of 32.8 g methanol, 6.87 g of deionized water, and 0.076 g hydrochloric acid (37%) were added dropwise at room temperature under stirring. After the addition, the reaction mixture was heated up to 85 °C for 3 hours. The solvent was removed by distillation at 85 °C under reduced pressure of about 150 to 180 mbar. For further removal of volatile organic compounds, the vacuum was set to below 10 mbar. 36.1 g of the targeted siloxane compound (SC1a) were obtained.

**Process for the production of the combination**

Trimethoxysilyl-terminated polyurethane polymer of the Si-PolyU series or Geniosil STP-E35 and a solvent-free liquid siloxane SC, obtained according to the process above, were homogenized in a Hauschild DAC 400.2 VAC-P Vacuum Speedmixer for 2 minutes at 2500 rpm and 3 mbar.

**Table 2: Viscosities and curing tests (with 1.0 wt% AMMO and 0.1 wt% DOTL) of various blends of SMPs and siloxane compounds SC1**

| Example | Comp 1 | Comp 2 | Comp 3 | Comp 4 | 1 | 2 | 3 | 4 | 5 | 6 | 7 | 8 |
|---|---|---|---|---|---|---|---|---|---|---|---|---|
| Component | Parts per weight | | | | | | | | | | | |
| Si-PolyU 2550 | 100 | | | | 90 | 70 | 50 | | | | | |
| Si-PolyU 4020 | | 100 | | | | | | 90 | 70 | | | |
| Si-PolyU 5013 | | | 100 | | | | | | | 90 | 70 | |
| GENIOSIL® STP-E35 | | | | 100 | | | | | | | | 90 |
| SC1 | | | | | 10 | 30 | 50 | 10 | 30 | 10 | 30 | 10 |

(continued)

| Technical Data | | | | | | | | | | | | |
|---|---|---|---|---|---|---|---|---|---|---|---|---|
| Dynamic viscosity [mPas] | 50000 | 20000 | 13000 | 30000 | 21000 | 3500 | 700 | 8400 | 1600 | 5200 | 1300 | 14100 |
| Reduction of viscosity[1] | / | / | / | / | 58% | 93% | 99% | 58% | 92% | 60% | 90% | 53% |
| SOT[2] [min] (22.6 °C, 23.9%) | 60 | 70 | 65 | 20 | 65 | 80 | N/A | 70 | 90 | 70 | 75 | 25 |
| Shore A | 25 | 40 | 53 | 42 | 23 | 25 | 25 | 44 | 46 | 48 | 48 | 38 |
| [1] compared to the viscosity of the SMP<br>[2] catalyzed with 0.1 wt% DOTL and 1.0 wt% AMMO | | | | | | | | | | | | |

In table 2 the effect of siloxane compound SC1 on the viscosity of the SMPs in the composition is shown for different SMPs and mixing ratios. SC1 has a content of octamethylcyclotetrasiloxane (D4) of 1.7 wt%.

**Table 3: Viscosity reduction upon storage.**

| Example | Comp 5 | Comp 6 | 9 | 10 | 11 |
|---|---|---|---|---|---|
| Component | Parts per weight | | | | |
| SMP1[3] without water scavenger | 100 | 100 | 100 | 100 | 100 |
| VTMO | | 0.9 | | | |
| SC1 | | | 2.0 | 5.0 | 10 |
| Dynamic viscosity [mPas] | 55800 | 50000 | 47600 | 37800 | 25600 |
| Reduction of viscosity[1] | | 10% | 15% | 32% | 54% |
| Storage | | | | | |
| Increase in viscosity relative to the initial value (7 days) | 10% | 18% | 13% | 4% | 4% |
| Increase in viscosity relative to the initial value (21 days) | 128% | 31% | 37% | 12% | 16% |
| Technical Data | | | | | |
| SOT[2] [min] (22.1 °C, 22.2%) | 50 | 65 | 55 | 65 | 65 |
| Shore A | 20 | 21 | 18 | 16 | 15 |
| SOT[2] [min] (24.2 °C, 21.1%) | | 60 | 70 | 70 | 80 |
| Shore A | | 19 | 17 | 14 | 13 |
| [1] compared to the viscosity of the SMP<br>[2] catalyzed with 0.1 wt% DOTL and 1.0 wt% AMMO<br>[3] trimethoxysilyl-terminated polyurethane polymer | | | | | |

Table 3 shows the stability of the viscosity reducing effect of the siloxane compounds over 21 days. The viscosity of a SMP in the combination together with siloxane compound SC1 is shown for different mixing ratios from 2 to 10 parts per weight per 100 parts per weight of SMP.

In addition, the further experiments show that the oligomeric siloxane compounds, such as siloxane compound SC1, can be used as a water scavenger, instead of VTMO, still retaining same storage stability. Thus, this compound represents a low VOC alternative to vinyltrimethoxysilane (i.e. label free).

**Table 4: Further Mixing experiment**

| Examples | Comp 7 | Comp 8 | 12 | 13 | 14 | 15 | 16 | 17 | 18 | 19 | Comp 9 | Comp 10 | Comp 11 |
|---|---|---|---|---|---|---|---|---|---|---|---|---|---|
| Component | Parts per weight | | | | | | | | | | | | |
| Si-PolyU 2550 | 100 | 90 | 90 | 90 | 90 | 90 | 90 | 90 | 90 | 90 | 90 | 90 | 90 |
| VTMO | | 10 | | | | | | | | | | | |
| SC1a (acid cat) | | | 10 | | | | | | | | | | |
| SC1 | | | | 10 | | | | | | | | | |
| SC2 | | | | | 10 | | | | | | | | |
| SC3 | | | | | | 10 | | | | | | | |
| SC4 | | | | | | | 10 | | | | | | |
| SC5 | | | | | | | | 10 | | | | | |
| SC6 | | | | | | | | | 10 | | | | |
| SC10 | | | | | | | | | | 10 | | | |
| Dynasylan® 6490 | | | | | | | | | | | 10 | | |
| SILIKOPHEN® AC 1000 | | | | | | | | | | | | 10 | |
| DOWSIL™ 3074 Intermediate | | | | | | | | | | | | | 10 |
| Technical Data | | | | | | | | | | | | | |
| Dynamic viscosity [Pas] | 50 | 14.3 | 24.2 | 21 | 20.8 | 24.8 | 22.7 | 27.7 | 30.5 | 24.2 | 24.8 | 27.3 | 36 |
| Phenyl con-tent [wt%] of siloxane com-pound | 0 | 0 | 0 | 0 | 0 | 24.5 | 0 | 37.5 | 50.2 | 0 | 0. | 0 | n.a. |
| $n(Ph/Si)$ in si-loxane com-pound | - | - | - | - | - | 0.36 | - | 0.6 | 1.0 | - | - | - | n.a. |
| Reduction of viscosity[1] | / | 71% | 52% | 58% | 58% | 50% | 55% | 45% | 39% | 52% | 50% | 45% | 28% |
| SOT[2] [min] (22.6 °C, 23.9 %) | 60 | 100 | 60 | 65 | 70 | 90 | 65 | 100 | 150 | 80 | 45 | 70 | 140 |
| Shore A | 25 | 31 | 25 | 23 | 23 | 22 | 21 | 16 | 14 | 20 | 28 | 29 | 21 |
| Content OR[2] [wt%] of silox-ane com-pound | | 62.8 | 21.2 | 26.4 | 26.8 | 23.4 | 21.8 | 21.3 | 17.6 | 23.0 | n.a. | ~35 | ~ 15 -18 |
| $n(Si/R^2)$ silox-ane com-pound | | 0.33 | 1.61 | 1.25 | 1.21 | 1.42 | 1.37 | 1.05 | 1.15 | 0.67 | n.a. | n.a. | n.a. |

(continued)

| Technical Data | | | | | | | | | | | | | |
|---|---|---|---|---|---|---|---|---|---|---|---|---|---|
| calc. max. weight of loss [%] | - | - | 3.1 | 3.6 | 3.6 | 3.3 | 3.1 | 3.0 | 2.7 | 3.2 | n.a. | 4.4 | 2.7 |

[1] Compared to the viscosity of the Si-PolyU 2550
[2] Catalyzed with 0.1 wt% DOTL and 1.0 wt% AMMO

Si-PolyU 2550 (trimethoxysilyl-terminated polyurethane polymer with a dynamic viscosity at 25 °C of approx. 50,000 mPas) and a solvent-free liquid siloxane compound were homogenized in a Hauschild DAC 400.2 VAC-P Vacuum Speedmixer for 2 minutes at 2500 rpm and 3 mbar.

The results in table 4 explicitly show the connection between phenyl group content and reduction of viscosity (e.g. examples 12, 15, 17 and 18) as well as the improved viscosity reduction at comparable technical data in comparison to commercially available siloxane compounds.

**Table 5: Further mixing experiments**

| Example | Comp 12 | 20 | 21 | 22 | 23 |
|---|---|---|---|---|---|
| Component | Parts per weight | | | | |
| Si-PolyU 2550 | 100 | 90 | 90 | 90 | 90 |
| SC7 | | 10 | | | |
| SC4 | | | 10 | | |
| Comp.SC8 | | | | 10 | |
| Comp.SC9 | | | | | 10 |
| Technical Data | | | | | |
| Dynamic viscosity [mPas] | 50000 | 22000 | 22700 | 23900 | 21500 |
| Reduction of viscosity[1] | / | 56% | 55% | 52% | 58% |
| SOT[2] [min] (22.6 °C, 23.9 %) | 60 | 35 | 65 | 65 | 75 |
| Shore A | 25 | 21 | 21 | 21 | 20 |
| calc. max. Weight of loss [%] | 1.0 | 2.6 | 3.1 | 3.7 | 4.1 |

[1] Compared to the viscosity of the Si-PolyU 2550
[2] Catalyzed with 0.1 wt% DOTL and 1.0 wt% AMMO

The results in table 5 explicitly show the connection between the D-unit content, the alkoxy content and the calculated maximum weight loss as well as SOT value. Values for D-unit content and alkoxy group ($OR^2$) content for SC7, SC4, SC8 and SC9 are as follows. SC4 has a content of octamethylcyclotetrasiloxane (D4) of 0.77 wt%.

| Content of | D-Units [mol%] | $OR^2$ content [wt%] |
|---|---|---|
| SC7 | 84 | 16.5 |
| SC4 | 65 | 21.8 |
| Comp.SC8 | 30 | 27.5 |
| Comp.SC9 | 0 | 31.3 |

**Claims**

1. Composition, preferably moisture-curing composition, comprising a combination of

   (A) at least one silane-modified polymer, which is preferably moisture-curing,

(B) a siloxane compound comprising units of the formula (I)

$$R^1{}_a(R^2O)_bR^3{}_cSiO_{(4-a-b-c)/2} \qquad (I),$$

wherein

$R^1$ may be identical or different and denotes a monovalent, SiC-bonded linear, branched or cyclic, saturated or unsaturated aliphatic hydrocarbyl radical having 1 to 12 carbon atoms;

$R^2$ may be identical or different and denotes a hydrogen or an alkylalkoxy radical, or a linear or branched, monovalent hydrocarbyl radical having 1 to 10 carbon atoms, or two radicals $R^2$ may form a cycle;

$R^3$ may be identical or different and denotes a monovalent, SiC-bonded linear, branched or cyclic, unsaturated or saturated organyl radical having 1 to 12 carbon atoms, preferably a linear, branched or cyclic, saturated or unsaturated hydrocarbyl radical or a heterocarbyl radical with X = O

a may be 0 or 1 or 2 ,

b may be 0 or 1 or 2 or 3,

c may be 0 or 1,

with the proviso that the sum of a+b+c is < 4, and in > 60 % to < 100 % of the units of the formula (I) a+c is 2.

2. Composition according to claim 1, wherein

$R^1$ may be identical or different and denotes a monovalent, SiC-bonded linear, branched or cyclic, saturated or unsaturated aliphatic hydrocarbyl radical having 1 to 12 carbon atoms;

$R^2$, identical or different, represents each a hydrogen or an alkylalkoxy radical, or a linear or branched, monovalent hydrocarbyl radical having 1 to 10 carbon atoms, or two radicals $R^2$ may form a cycle;

$R^3$ may be identical or different and denotes a monovalent, SiC-bonded, linear, branched or cyclic, unsaturated or saturated hydrocarbyl radical having 1 to 12 carbon atoms or heterocarbyl radical with X = O having 1 to 12 carbon atoms

a maybe 0 or 1 or 2 ,

b may be 0 or 1 or 2 or 3,

c may be 0 or 1,

with the proviso that the sum of a+b+c is < 4, and in > 60 % to < 100 % of the units of the formula (I) a+c is 2.

3. Composition according to claim 1 or 2, **characterized in that** the content of alkoxy groups ($OR^2$ + $OR^5$) in the combination of (A) and (B) is less than 22 wt%, preferably less than 15 wt% based on the total amount of the combination of (A) and (B) or 0.4 to 1.5, preferably 0.6 to 1.1, silicon atoms per alkoxy group based on the total amount of the combination of (A) and (B).

4. Composition according to any of the preceding claims, **characterized in that** the content of phenyl groups in the combination of (A) and B) is less than 25 wt%, preferably less than 15 wt%, more preferably less than 5 wt% based on the total amount of the combination of (A) and B).

5. Composition according to any of the preceding claims, **characterized in that**

$R^1$, $R^2$ and $R^3$ are as defined above and wherein

a may be 0 or 1,

b may be 0 or 1 or 2,

c may be 1

with the proviso that the sum of a+b+c is < 4, and **in that** > 60% to < 100 % of the units of the formula (I) a+c is 2

6. Composition according to any of the preceding claims, **characterized in that** at least one silane-modified polymer, which is preferably moisture- curing, comprises an n-valent polymeric backbone Y and n groups according to formula (II):

$$-Si(R^4)_p(OR^5)_{3-p} \qquad (II)$$

wherein

$R^4$ may be a linear or branched monovalent hydrocarbyl radical having 1 to 10 carbon atoms, more preferably methyl or ethyl;

$R^5$, identical or different, represents each an acyl radical, or a linear or branched, monovalent hydrocarbyl radical having 1 to 10 carbon atoms, preferably from 1 to 5 carbon atoms, more particularly $R^5$ being methyl or ethyl or two radicals $R^5$ may form a cycle;

p may be 0, 1 or 2, preferably 0, and

Y is preferably selected from the group consisting of polyether, polyether polyol, polyetheramine, polyester, poly(ether-ester), polyolefin, polycaprolactone, polycarbonate, poly(ether-carbonate), poly(meth)acrylate, polyacetal, polythioether, polyureaand polyurethane, more preferably polyether polyol or polyurethane, most preferably polyurethane,

n is an integer, preferably between 1 and 4, more preferably, 2 or 3, most preferably 2.

7. Composition according to any of the preceding claims **characterized in that** the composition does not contain non-reactive plasticizers, preferably phthalate plasticizers.

8. Process for the production of, preferably moisture-curable compositions, preferably according to claims 1 to 7, comprising the steps:

I. synthesis of, preferably moisture-curing, siloxane compound (B) by effecting hydrolysis and condensation of alkoxysilanes of the following general formula:

$$R^1_d(R^2O)_eR^3_fSi \qquad \text{(III)}$$

wherein $R^1$, $R^2$ and $R^3$ are as defined above for formula (I), being

$R^1$ may be identical or different and denotes a monovalent, SiC-bonded linear, branched or cyclic, saturated or unsaturated aliphatic hydrocarbyl radical having 1 to 12 carbon atoms;

$R^2$ may be identical or different, and represents a hydrogen or an alkylalkoxy radical, or a linear or branched, monovalent hydrocarbyl radical having 1 to 10 carbon atoms, or two radicals $R^2$ may form a cycle;

$R^3$ may be identical or different and denotes a monovalent, SiC-bonded linear, branched or cyclic, unsaturated or saturated organyl radical having 1 to 12 carbon atoms, preferably a linear, branched or cyclic, saturated or unsaturated hydrocarbyl radical or a heterocarbyl radical with X = O

d may be 0 or 1 or 2,

e may be 1 or 2 or 3 or 4,

f may be 0 or 1

with the proviso that the sum of d+e+f is 4, and in > 60 % to < 100 % of the alkoxysilanes of the formula (III) d+f is 2.

II. combining the siloxane compound, preferably of the general formula (I), formed in step I. with at least one, preferably moisture-curing, silane-modified polymer (A).

9. Process according to claim 8, **characterized in that**

$R^1$ may be identical or different and denotes a monovalent, SiC-bonded linear, branched or cyclic, saturated or unsaturated aliphatic hydrocarbyl radical having 1 to 12 carbon atoms;

$R^2$ may be identical or different and represents a hydrogen or an alkylalkoxy radical, or a linear or branched, monovalent hydrocarbyl radical having 1 to 10 carbon atoms or two radicals $R^2$ may form a cycle;

$R^3$ may be identical or different and denotes a monovalent, SiC-bonded, linear, branched or cyclic, unsaturated or saturated hydrocarbyl radical or heterocarbyl radical with X = O, having 1 to 12 carbon atoms

d may be 0 or 1 or 2,

e may be 1 or 2 or 3 or 4,

f may be 0 or 1

with the proviso that the sum of d+e+f is 4, and in > 60 % to < 100 % of the alkoxysilanes of the formula (III) d+f is 2.

10. Process according to any one of claims 8 or 9, **characterized in that** the ratio of $R^2$ of the alkoxysilane of formula (III) in mol to the amount of water used in the hydrolysis and condensation of the alkoxysilane in mol is 2 to 5.

11. Process according to any one of claims 8 to 10, **characterized in that** the alkoxysilanes of formula (III) are selected from the group consisting of dimethyl-dimethoxysilane, dimethoxy-methyl-phenylsilane, dimethoxy-methyl-vinylsilane, diethoxy-dimethylsilane, diethoxy-methyl-phenylsilane, diethoxy-methyl-vinylsilane, dimethylbis(metoxyethoxy)silane or mixtures thereof and the group selected from trimethoxymethylsilane, vinyltrimethoxysilane, phenyltrimethoxysilane, trimethoxyethylsilane, trimethoxypropylsilane isobutyltrimethoxysilane, (3-glycidyloxypropyl)trimethoxysilane, tris(2-methoxyethoxy)vinylsilane, methyltriethoxysilane, vinyltriethoxysilane, phenyltriethoxysilane, triethoxyethylsilane, triethoxypropylsilane isobutyltriethoxysilane, (3-glycidyloxypropyl)triethoxysilane or mixtures thereof.

12. Composition, preferably according to claims 1 to 7, obtained by a process according to claims 8 to 11.

13. Composition according to claims 1 to 7 or 12, **characterized in that** the dynamic viscosity at 25°C of the composition is at least 10 %, preferably at least 30 %, more preferably at least 50 % reduced compared to the same composition without siloxane compound (B).

14. Shaped object obtained by curing a composition according to claims 1 to 7, 12 or 13.

15. Use of a siloxane compound comprising units according to formula (I), preferably as defined in claims 1 to 7 or as produced in step I. of the process according to claims 8 to 11, for reduction of the dynamic viscosity of silane-modified polymer (A), preferably measured with a Brookfield DV2T EXTRA™ Viscometer using Spindle SC4-31 at 25°C, preferably by at least 50 %, preferably without altering the transparency and/or mechanical properties of the silane-modified polymer (A), more preferably without altering the values for shore A hardness, tensile strength and elongation at break by more than 15 %.

Europäisches
Patentamt

European
Patent Office

Office européen
des brevets

# EUROPEAN SEARCH REPORT

**Application Number**

EP 23 19 7248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/048728 A1 (WACKER CHEMIE AG [DE]) 10 March 2022 (2022-03-10) * examples 1-26 * * tables 3,4,6 * * claims 1-11 * | 1-15 | INV. C08G65/336 C08L75/04 C08L83/04 C09D183/04 C09J183/04 |
| X | US 2017/210957 A1 (STANJEK VOLKER [DE] ET AL) 27 July 2017 (2017-07-27) * examples 1-8 * * claims 1-20 * | 1-6, 8-12,14 | |
| A | US 3 971 751 A (ISAYAMA KATSUHIKO ET AL) 27 July 1976 (1976-07-27) * examples 1-6 * * claims 1-20 * | 1-15 | |

**TECHNICAL FIELDS SEARCHED (IPC)**

C08G
C08L
C09D
C09J

The present search report has been drawn up for all claims

| Place of search | Date of completion of the search | Examiner |
|---|---|---|
| The Hague | 5 February 2024 | Popescu, Teodora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 7248

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2024

| Patent document cited in search report | | | Publication date | Patent family member(s) | | Publication date |
|---|---|---|---|---|---|---|
| WO 2022048728 | A1 | 10-03-2022 | | EP | 4208492 A1 | 12-07-2023 |
| | | | | WO | 2022048728 A1 | 10-03-2022 |
| US 2017210957 | A1 | 27-07-2017 | | CN | 106232732 A | 14-12-2016 |
| | | | | DE | 102014207508 A1 | 22-10-2015 |
| | | | | EP | 3131997 A1 | 22-02-2017 |
| | | | | JP | 2017514936 A | 08-06-2017 |
| | | | | KR | 20160148592 A | 26-12-2016 |
| | | | | US | 2017210957 A1 | 27-07-2017 |
| | | | | WO | 2015158623 A1 | 22-10-2015 |
| US 3971751 | A | 27-07-1976 | | NONE | | |

EPO FORM P0459

For more details about this annex : see Official Journal of the European Patent Office, No. 12/82

**EP 4 524 178 A1**

REFERENCES CITED IN THE DESCRIPTION

**Patent documents cited in the description**

- EP 0698632 B1
- WO 2022048728 A1
- US 3971751 A

**Non-patent literature cited in the description**

- *CHEMICAL ABSTRACTS*, 1112-39-6
- *CHEMICAL ABSTRACTS*, 2768-02-7
- *CHEMICAL ABSTRACTS*, 2996-92-1
- *CHEMICAL ABSTRACTS*, 16753-62-1
- *CHEMICAL ABSTRACTS*, 3027-21-2
- *CHEMICAL ABSTRACTS*, 1185-55-3
- *CHEMICAL ABSTRACTS*, 18395-30-7
- *CHEMICAL ABSTRACTS*, 2530-83-8
- *CHEMICAL ABSTRACTS*, 39389-20-3
- *CHEMICAL ABSTRACTS*, 3648-18-8